# EUROPEAN PATENT SPECIFICATION

(11) **EP 1 157 810 B1**
(45) Date of publication and mention of the grant of the patent: **23.06.2004**
(21) Application number: 00988816.5
(22) Date of filing: 26.12.2000
(51) Int. Cl.: B29C 70/48, B29C 45/02

(54) **PROCESS FOR MANUFACTURING STRUCTURAL PARTS MADE OF COMPOSITE MATERIAL BY RESIN TRANSFER MOLDING AND EQUIPMENT TO CARRY OUT THE PROCESS**
VERFAHREN ZUR HERSTELLUNG VON STRUKTURTEILEN AUS COMPOSIT-MATERIAL NACH DEM HARZ-INJEKTIONS-VERFAHREN UND VORRICHTUNG ZUR DURCHFÜHRUNG DES VERFAHRENS
PROCEDE DESTINES A LA FABRICATION DE PIECES STRUCTURELLES EN MATERIAU COMPOSE PAR MOULAGE PAR TRANSFERT DE RESINE ET EQIPEMENT POUR LA MISE EN OEUVRE DE CE PROCEDE

(30) Priority: 28.12.1999 ES 9902855
(43) Date of publication of application: 28.11.2001
(73) Proprietor: UNIVERSIDAD POLITECNICA DE MADRID, 28040 Madrid (ES)
(72) Inventor: RODRIGUEZ DE FRANCISCO, Pablo, ETSI Aeronáuticos, Ciudaad Universitaria, 28040 Madrid (ES); MARTINEZ-VILANOVA, Rafael ETSI Aeronáuticos, Ciudaad Universitaria, 28040 Madrid (ES); SANZ LOBERA, Alfredo ETSI Aeronáuticos, Ciudaad Universitaria, 28040 Madrid (ES)
(74) Representative: Davila Baz, Angel
(86) International application number: PCT/ES2000/000488
(87) International publication number: WO 2001/047693

(56) References cited:
- WO-A-96/22871
- US-A- 5 187 001
- US-A- 5 516 271
- US-A- 5 518 388

## Description

### Field of the invention:

The present invention relates to a process to manufacture structural composite material pieces made by resin transfer moulding and to an equipment to carry out the process.

The main use of this invention corresponds to the production of high performance composite material components manufactured with organic resins and long fibre. The application fields are those in which the elements require these characteristics, emphasizing the aerospace field and probably in a near future other transport sectors and related fields as well. Other fields where these applications could be important are in the biomedical field, in particular in relation to prosthesis implants in humans, as well as top-level sport competitions.

### Background of the invention:

The concept of manufacturing composite material components by means of resin transfer moulding has already been used for several decades. Essentially, it consists of a closed mould with the reinforcement or preform placed inside which is filled with liquid resin, so that later the curation of the resin takes place.

In order to carry out the process, when working with resins for aerospace applications, it is necessary to previously prepare or condition them, before making the transfer. In the case of monocomponent resins, resin conditioning consists of heating until the temperature that allows the resin flow is reached and in a degassing that eliminates the unwanted volatile elements or the moisture absorbed during its storage, if any. In case of multicomponent resins, usually two-part resins, an additional step of mixture and homogenisation of the different parts at the right rates is required.

In order to obtain the suitable characteristics of the parts, it is also necessary to assure watertightness to prevent resin leakage or air from entering inside the part, all of them at the working pressure and temperatures of the process. A method to verify vacuum, when applied, is to measure the vacuum level reached in the mould while a vacuum pump is working.

On the other hand, if it is wanted to provide an additional resin feeding, in order to compensate the volumetric variations that take place during the cure, the transfer equipment must remain connected to the mould until the end of the curing cycle. This fact restricts the use of the above-mentioned equipment for the production of other components. Besides, to be able to make this additional feeding, the resin that remains in the equipment must be kept at such a viscosity status that allows its flow through the connecting pipes toward the mould and inside the mould itself.

Once the transfer is finished, the rest of resin that remains in the equipment is not re-usable for structural quality parts. It is a waste uncomfortable to clean, that results in a negative impact on the process time cycle and may even produce environmental problems, in particular because it is not yet cured.

Patent US-A-5187001, (Gencorp Inc. 16.02.93. Resin transfer molding apparatus), describes the apparatus and the concept used by pumping the resin to an injection head. In the document, the cleaning of pipes by means of dissolvent is mentioned.

When the resin curing cycle is finished, usually by means of the mould temperature control, and the part is already produced, the connections between the equipment and the mould must be prepared once again. The normal practice when producing structural quality parts is the substitution of already used pipes. This activity is more work demanding when pipe heating systems are used, which is usually necessary when the transfer temperatures that make the resin be liquid enough are over 80° C.

Grouping the three functions above mentioned: conditioning, transferring with the possibility of additional feeding, and sealing verification in only one device, impacts negatively on the productivity, and thus, on the competitiveness of the process against other manufacturing options.

In patent US-A-5516271 (United Technologies Corp. 14.05.96. Apparatus for resin transfer molding) the piece quality concept has to do with controlling resin flow, just as much in rate as in total amount. For it, it uses a displacement control system along with the piston, that pushes the resin into the mould and that is the fundamental aim of this patent. Besides, in patent US-A-5518388 (United Technologies Corp. 21.05.96. Automated apparatus and method for resin transfer molding) the previous concept is extended to an automatic process that controls also the pressure of resin flowing.

On other hand, patent WO 96/22871 (McDonnell Douglas. 01.08.96. Method of resin transfer molding) tries to reduce the voids by applying high pressure in additional resin pipes.

### Description of the invention:

It is the object of the invention to get a better RTM process from the points of view of quality of results, productivity and health at work, i.e. to obtain a lower voids rate and a shorter cycle time and to avoid uncured resin remains. This object is achieved according to the invention by the process as defined in claim 1 and by the equipment as defined claims 4, 7 and 8.

Particular embodiments of the invention are the subject of the respective dependent claims.

The proposed process and equipment, makes it easy to implant a production system that has, as fundamental objective, the improvement of the resin transfer method when applied to the manufacturing of composite material components with structural characteristics.

The concept that supports these improvements is mainly based on the separation of the necessary functions to carry out the process into different parts, devices or subsystems specifically designed. This allows, from one hand to perform different functions at the same time in several moulds, using one subsystem as support for the others and from the other hand, to substitute the cleaning of the remaining resin that is not cured with the releasing of the cured resin rests from the container used for conditioning and additional feeding.

In order to achieve this, the production system equipment is divided in three parts. The first one, is the Integrated in the Mould Resin Conditioning Device (DARIM), the second one, is the Vacuum Management and Identification (GVI) device for sealing verification and transfer assistance and the third one, is the Thermal and Flow Control device (CTF).

The DARIM is a container, or main body, cone-shaped inside, whose surface is coated with a release agent. The filling with resin is made by the upper part. The outlet is made by an inserted pipe with a slight cone-shape inside, screwed to the container at its bottom base. Another element with these same characteristics placed in the outer cylindrical wall, near its upper end, serves to apply pressure or vacuum to the resin. The connection to these elements is made using flexible pipes. A heating system for the assembly is placed on the external surface and temperature sensors, for the necessary record and control of thermal cycles, are located on its base.

The DARIM is closed by means of an upper lid, that is fixed to the main body by bolts or quick locking devices and it is kept sealed by means of elastomeric material joints. This lid includes a security glass window allowing the observation of the resin during the conditioning phase and during the transfer and curing cycle.

The outlet of the DARIM is connected to the mould using pipes of elastomer, on which a pressing device acts as a valve that allows or obstructs the resin flow. Since the DARIM is close to the mould, the increase of resin viscosity caused by the cooling of resin in pipes has a little influence, and thus, the heating of the pipes is not required. The DARIM can be taken as an annex or part of the mould itself, this means, it is grouped or incorporated to the mould and can maintain a constant pressure during the resin cure inside the mould.

The releasing of resin rests not used for the piece from the inner cone-shaped DARIM in form of solid cured resin allows to decrease the cycle time and thus, it is improved both productivity and health conditions at work environment.

The Thermal and Flow Control device (CTF) regulates simultaneously and independently both the DARIM and mould temperatures, regulates the pressure/vacuum level inside the DARIM, and also indicates the overpressure for the transfer and feeding. In addition, the CTF manages the status of the resin flow valves between the resin conditioning device and the mould, as well as the mould outlets, making it possible to operate them in a remote way. Regarding temperatures, the CTF device treats separately the conditioning and curing phases for the mould and for the DARIM, proceeding simultaneously and independently with the cure of both resin inside the mould and resin remains carrying out the cure of the resin remains after the cure of the resin in the mould. This device is linked to the mould during the complete manufacturing process of a component.

To operate the resin flow valves in a remote way, far away of heated components, also improve the health at work environment.

The vacuum level obtained and kept in the mould during the transfer is a fundamental aspect in the quality of results. For this reason, according to an aspect of the present invention, it is important to perform sealing tests using vacuum level meter devices that measure the variation (increase from a minimum pressure) of vacuum pressure level for a defined time into the mould without the vacuum pump working.

The Vacuum Management and Identification device (GVI) includes sensors of vacuum level with resolution of at least a milibar or better and detectors that identify the current working elements for record, trazability and product assurance matters. It is connected to the above-mentioned CTF device using a pipe with vacuum plug and receives the devices for identification of both, the CTF itself and the current working mould. In this way, it is possible display the mould and the DARIM vacuum level during resin conditioning and during transfer, and the elements being worked with are identified. Because of them, it is possible to make tests in order to verify the closing and sealing of moulds before continuing with the transfer. This allows a sealing verification procedure to process control and quality assurance activities by measuring the variation (increase from a minimum pressure) of vacuum level into the mould, for a defined time, without the vacuum pump working. Once these operations have been completed or even between them, the GVI can be disconnected of this CTF equipment and connected to another CTF equipment with its associated mould and DARIM. That is, it can be used in a sequential way with different thermal and flow control devices without the need to wait until the cure cycle is completed through the connection and disconnection of a pipe. Thus, the GVI device gives service in sequence to several groups of CTF-DARIM-mould to perform on them the mentioned activities and allowing the manufacturing at the same time of several components, using the CTF devices to manage the cure cycles.

### Working mode (detailed description of the invention)

The proposed process, to be carried out using the above described equipment, starts by connecting the flexible pipes that come from the DARIM to the mould inlet and connecting the flexible pipes that come from the CTF device to the mould outlet, both with their corresponding control valves. The sensor for thermal control of the mould and the DARIM must also be connected. If it has not been done before, the necessary amount of resin for one transfer is poured into the DARIM, and in the case of multicomponent resin also having to prepare the precise mixture. At this point, the CTF cycle of conditioning that heats both the mould and the DARIM starts to function. Once the resin has reached the appropriate temperature, the GVI device is connected reading the mould and equipment identifications. When the corresponding switches of the CTF device are actuated upon, the degassing takes place. Once the degassing period is finished, and the DARIM connection to the vacuum is closed, the sealing test on the mould must follow. Waiting is required until the vacuum measure is stabilized. The flow from the vacuum pump is then closed off using the GVI device closing valve. The vacuum level variations during a given period of time is then observed, comparing these variations to those specified on the procedure. If the variations are inside the specified limits in the procedure, the transfer process can continue. However, if they are not, the process is stopped to fix the mould until the appropriate vacuum level is obtained. Once the sealing test is successfully performed, the vacuum is connected again from the GVI device in order to proceed with the transfer and once the appropriate vacuum level is reached, the valve at the DARIM outlet is opened. This part of the process can have variations in the sense of closing the valve at the mould outlet before opening the valve at its inlet or waiting until the resin flows out through the outlet pipes before closing them. It is also possible to transfer with the DARIM left at atmospheric pressure, pulling the resin only by using the vacuum of the mould, or assisting the resin flow by adding pressure to the DARIM inside.

When this operation is finished, the cure cycle at the currently used CTF device is started and the GVI device can be disconnected so that it may be used with another CTF connected to another mould. One of the most outstanding features of the proposed process consists on delaying the cure cycle of the resin in the DARIM with respect to the resin inside the mould through the synchronization of the temperature control on temperature controllers. Therefore, the resin in the mould starts its cure first and possible contractions or additional resin requirements can be provided by the remaining resin in the DARIM. Subsequently, the resin in the DARIM cures, in such a way that when the process is finished, which usually takes several hours for the standard resins, there is no liquid resin left inside the DARIM. Therefore, the DARIM will not contain any uncured resin remains from one run to the next one. In this way, the cleaning of the equipment consists only in the substitution of the pipes, which have resin solidified at their extremes, and in releasing the cured resin block from the interior of the DARIM.

### Procedure of invention accomplishment:

One of the ways to produce a DARIM consists of separately manufacturing the main body and the two pieces of the lid, by machining from the corresponding metallic preforms. The inlet and outlet plugs, although they can be manufactured especially for the DARIM, are commercially available from other industrial designs. The security glass is also a commercially available product and the sealing joints can be obtained from high temperature operation elastomers, commercially available as well.

The production of the CTF is obtained by purchasing several simple devices, such a temperature controllers, sensors, electric-pneumatic valves, electric and pneumatic connectors, switches, lighting indicators, pressure readers and accessories for hardness and pneumatic connections, that can be also mounted inside a commercially available rack.

The production of the GVI is also obtained by the purchasing of several simple devices. In this case, vacuum sensors and readers, electric-pneumatic valves, electric and pneumatic connectors, switches, lighting indicators, and accessories for hardness and pneumatic connections, that can be also mounted inside a commercially available rack.

### Drawings description:

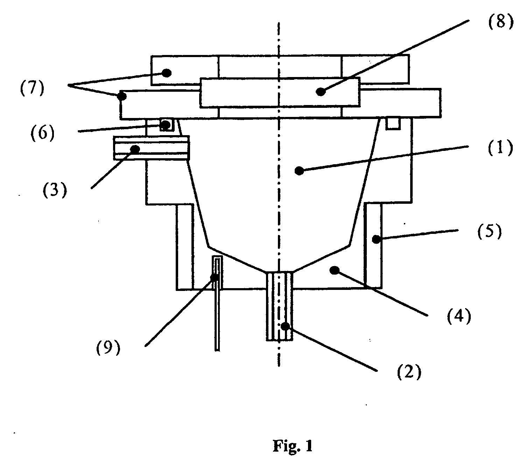

The first drawing, figure 1, shows a sketch of sectioned DARIM. It can be seen the cone-shape of the resin housing (1) in the main body (4). Because of this shape, the release of the remaining resin, already solidified, can be accomplished by pushing it from the inner hole of the outlet gate (2). The inner hole of this outlet gate (2) is also cone-shaped to facilitate the above mentioned release operation, although it cannot be seen in the sketch because the angle of cone is very small. The element (3) is the inlet plug for vacuum and pressure connection to the thermal and flow control device (CTF). The DARIM is filled with resin in such a manner that the level does not reach the height of the inlet gate (3). The main body (4) presents an external cylindrical surface where a heating system (5) is placed making it possible to set the temperature, for the previous resin conditioning before the transfer as well as for the final cure. Holes (9) at the bottom of the main body house the temperature sensors for the control system. The parts (7) compose the closing lid in which the security glass (8) is found that serves as a view window, and this lid seals with sealing joints placed in the housing (6).

In this diagram, neither the flexible pipes, the closing valve that operates on the outlet pipe, nor the pieces that fix the lid and the support of the assembly to the main body are shown.

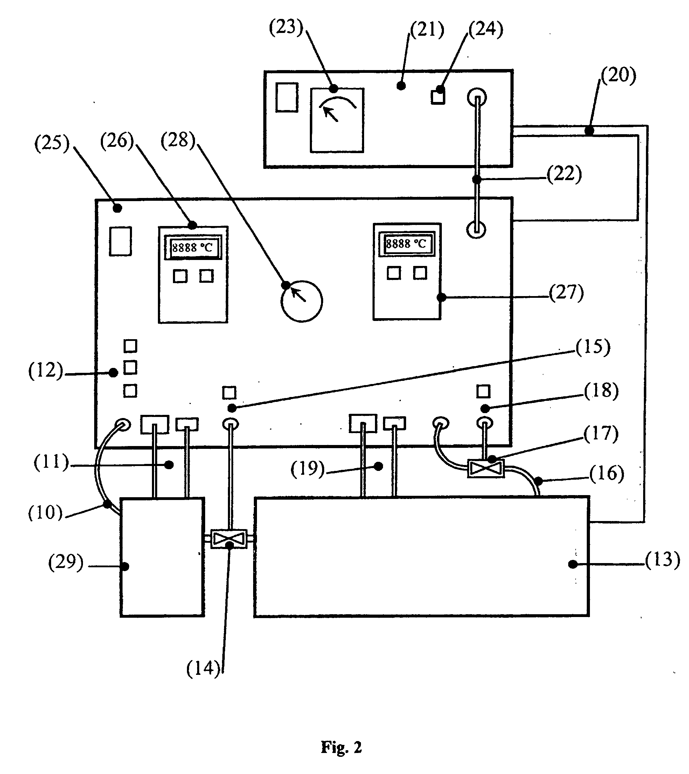

In figure 2, a sketch with the location of the different parts of equipment is shown. The Vacuum Management and Identification device (GVI) (21) connects the vacuum to the Thermal and Flow Control device (CTF) (25) by means of a flexible pipe (22). In the GVI (21) device are located the vacuum level sensor and readers (23), as well as the valve operated by the switch (24) that cut off the connection from the vacuum pump to the system. The CTF device (25) includes the temperature controller (26) for the DARIM, the temperature control system for the mould (27), which in this case is represented by only one element, and the pressure reader (28) of the DARIM (29). The connections from the CTF (25) to DARIM (29) are: the pressure and vacuum line (10), the temperature sensor and the power line for heating (11). The switches (12) are the management system which allows the DARIM (29) to receive pressure, vacuum or to be left connected to the atmosphere. The DARIM (29) outlet pipe crosses the valve (14) that can be operated in a remote manner using the switch (15). The heating system of the mould (13) is also powered through the CTF (25) by means of the connections (19) with their corresponding sensors. The vacuum connection to the mould is made by the pipe (16), and the flow through it can be controlled by the valve (17), which also can be operated in a remote way by means of the switch (18). The system that allows the GVI to identify the mould and the current working equipment is represented by lines (20).

### Industrial application:

The described equipment and process are applied in industry for the production of high performance composite material components with long fibre and organic resins. In particular, it is useful when repetitiveness is required to guarantee the part performance by process control, to increase the production rates, to certify production process, to reduce the amount of manpower needed and also in order to agree with health and environmental standards.

## Claims

1. Process to manufacture structural composite material pieces made by resin transfer moulding from the point of view of assuring the quality of results, productivity and health at work, **characterized in that** the vacuum sealing of the closed mould is verified before the resin transfer, and resin rests not used for the piece are released in form of solid cured resin from a container used for conditioning and additional feeding after the transfer.

2. The Process of claim 1 **characterized in that**, in order to assure the quality of results by means of the verification of the vacuum sealing of the closed mould before the transfer, it measures the increase of pressure, for a defined time and without the vacuum pump working, from the minimum pressure of vacuum level reached into the mould.

3. The Process of claim 1 **characterized in that**, in order to supply finally both, the manufactured piece and the resin rests as other piece in form of solid cured resin from the container used for conditioning and additional feeding , the temperatures of both the resin conditioning device (29) and the mould (13) are controlled simultaneously and independently, carrying out the cure of the resin remains after the cure of the resin in the mould.

4. Equipment to carry out the process of claim 2 **characterized in that**, in order to verify the vacuum sealing of the closed mould before the transfer by means of measuring the increase of pressure, for a defined time and without the vacuum pump working, from the minimum pressure of vacuum level reached into the mould, it comprises a split device or subsystem (21), with a vacuum level sensor and readers (23) and a valve to close the breath from the vacuum pump.

5. The equipment of claim 4, **characterized in that** the split device or subsystem (21) to make a sealing verification procedure identifies the current working elements, mould and equipment on which it is being performed, through the reading of the mould and equipment identifications (20).

6. The equipment of claim 4, **characterized in that** the split device or subsystem (21) to make a sealing verification procedure can support various thermal and flow control devices (25) in a sequential way through the connection and disconnection of a pipe (22).

7. Equipment to carry out the process of claim 3, **characterized in that** it comprises a split device or subsystem used for conditioning and additional feeding of resin (29) designed and manufactured to release the resin rests not used for the piece in form of solid cured resin through an inner cone-shaped geometry.

8. Equipment to carry out the process of claim 3, **characterized in that** it comprises a thermal and flow control subsystem (25) that carries out the cure of the resin in the mould (13) as well as the cure of the resin remains in the conditioning and additional feeding device (29) simultaneously and independently through the synchronization of the temperature control on temperature controllers.

## Patentansprüche

1. Verfahren zur Produktion von durch Harztransferpressen hergestellten Verbundmaterial-Bauteilen aus Sicht der Gewährleistung der Qualität der Ergebnisse, der Produktivität und der Gesundheit am Arbeitsplatz, **dadurch gekennzeichnet, dass** die Vakuumabdichtung der geschlossenen Form vor dem Harztransfer verifiziert wird und dass Harzreste, die nicht für das Bauteil verwendet werden, in Form von festem ausgehärtetem Harz aus einem Behälter gelöst werden, der zur Konditionierung und zusätzlichen Zufuhr von Harz nach dem Transfer verwendet wird.

2. Verfahren nach Anspruch 1, **dadurch gekennzeichnet, dass**, um die Qualität der Ergebnisse mittels des Verifizierens der Vakuumabdichtung der geschlossenen Form vor dem Transfer zu gewährleisten, der Druckanstieg von dem in der Form erreichen Mindestdruck der Vakuumstufe ausgehend für eine bestimmte Zeitdauer und bei stillstehender Vakuumpumpe gemessen wird.

3. Verfahren nach Anspruch 1, **dadurch gekennzeichnet, dass**, um letztendlich sowohl das produzierte Teil als auch die Harzreste als ein anderes Teil in Form von festem ausgehärtetem Harz aus dem Behälter, der zur Konditionierung und zusätzlichen Zufuhr von Harz verwendet wird, zu erhalten, die Temperatur sowohl der Harzkonditionierungsvorrichtung (29) als auch der Form (13) gleichzeitig und unabhängig voneinander gesteuert wird, wobei die Aushärtung der Harzreste nach dem Aushärten des Harzes in der Form erfolgt.

4. Technische Ausrüstung zum Ausführen des Verfahrens von Anspruch 2, **dadurch gekennzeichnet, dass**, um die Vakuumabdichtung der geschlossenen Form vor dem Transfer mittels Messen des Druckanstiegs - für eine bestimmte Zeitdauer und bei stillstehender Vakuumpumpe - von dem in der Form erreichen Mindestdruck der Vakuumstufe ausgehend zu verifizieren, diese technische Ausrüstung eine Trennvorrichtung bzw. ein Teilsystem (21) mit einem Sensor zum Erfassen der Vakuumstufe und Lesegeräten (23) und einem Ventil zum Absperren der Verbindung zur Vakuumpumpe umfasst.

5. Technische Ausrüstung nach Anspruch 4, **dadurch gekennzeichnet, dass** die Trennvorrichtung bzw. das Teilsystem (21) zur Durchführung eines Dichtheitsverifizierungsverfahrens die augenblicklich vorhandenen Arbeitselemente, die Form und die Ausrüstung, an der das Dichtheitsverifizierungsverfahren durchgeführt wird, erkennt, indem die Form- und Ausrüstungsidentifikationen (20) gelesen werden.

6. Technische Ausrüstung nach Anspruch 4, **dadurch gekennzeichnet, dass** die Trennvorrichtung bzw. das Teilsystem (21) zur Durchführung eines Dichtheitsverifizierungsverfahrens verschiedene Wärme- und Durchflusssteuerungsvorrichtungen (25) in sequenzieller Weise vermittels des Anschließens und Abtrennens eines Rohres (22) unterstützen kann.

7. Technische Ausrüstung zum Ausführen des Verfahrens von Anspruch 3, **dadurch gekennzeichnet, dass** diese technische Ausrüstung eine Trennvorrichtung bzw. ein Teilsystem für die Konditionierung und zusätzliche Zufuhr von Harz umfasst, die bzw. das so konstruiert und hergestellt ist, dass die Harzreste, die nicht für das Teil verwendet werden, in Form von festem ausgehärtetem Harz vermittels einer inneren konusförmigen Geometrie herausgelöst werden.

8. Technische Ausrüstung zum Ausführen des Verfahrens von Anspruch 3, **dadurch gekennzeichnet, dass** diese technische Ausrüstung ein Wärmeund Durchflusssteuerungsteilsystem (25) umfasst, das die Aushärtung des Harzes in der Form (13) sowie die Aushärtung der Harzreste in der Vorrichtung (29) für das Konditionieren und die zusätzliche Zufuhr von Harz gleichzeitig und unabhängig voneinander vermittels des Synchronisierens der Temperatursteuerung an Temperatursteuerungsvorrichtungen ausführt.

## Revendications

1. Procédé pour la fabrication de pièces structurelles en matériau composite, réalisées par moulage par transfert de résine du point de vue de la garantie de la qualité des résultats, de la productivité et de la santé sur le lieu de travail, **caractérisé en ce que** l'étanchéité de vide du moule fermé est vérifiée avant le transfert de résine, et les restes de résine non utilisés pour la pièce sont libérés sous la forme d'une résine durcie solide d'un récipient utilisé pour le conditionnement et l'alimentation supplémentaire après le transfert.

2. Procédé selon la revendication 1, **caractérisé en ce qu'**afin de garantir la qualité des résultats au moyen de la vérification de l'étanchéité de vide du moule fermé avant le transfert, on mesure l'augmentation de pression pendant une période de temps définie et sans que la pompe à vide ne fonctionne, à partir de la pression minimum du niveau de vide atteint dans le moule.

3. Procédé selon la revendication 1, **caractérisé en ce qu'**afin d'alimenter finalement à la fois la pièce fabriquée et les restes de résine comme une autre pièce sous la forme de résine durcie solide du récipient utilisé pour le conditionnement et l'alimentation supplémentaire, les températures du dispositif de conditionnement de résine, ainsi que du moule sont contrôlées simultanément et indépendamment, réalisant le durcissement de la résine qui reste après le durcissement de la résine dans le moule.

4. Equipement pour réaliser le procédé selon la revendication 2, **caractérisé en ce qu'**afin de vérifier l'étanchéité de vide du moule fermé avant le transfert au moyen de la mesure de l'augmentation de la pression, pendant une période de temps définie et sans que la pompe à vide ne fonctionne, à partir de la pression minimum du niveau de vide atteint dans le moule, il comprend un dispositif divisé ou sous système (21) avec un capteur de niveau de vide et des lecteurs (23) et une soupape pour fermer le souffle provenant de la pompe à vide.

5. Equipement selon la revendication 4, **caractérisé en ce que** le dispositif divisé ou sous système (21) pour qu'une procédure de vérification de l'étanchéité identifie les éléments de travail courants, le moule et l'équipement sur lequel il a été réalisé, par le biais de la lecture des identifications du moule et de l'équipement (20).

6. Equipement selon la revendication 4, **caractérisé en ce que** le dispositif divisé ou sous système (21) pour qu'une procédure de vérification d'étanchéité puisse supporter différents dispositifs thermiques et de contrôle de débit (25) d'une manière séquentielle par le biais du raccordement et de la déconnexion d'un tuyau (22).

7. Equipement pour réaliser le procédé selon la revendication 3, **caractérisé en ce qu'**il comprend un dispositif divisé ou sous système utilisé pour le conditionnement et l'alimentation supplémentaire de la résine, conçu et fabriqué pour libérer les restes de résine non utilisés pour la pièce sous forme de résine durcie solide par le biais d'une géométrie interne en forme de cône.

8. Equipement pour réaliser le procédé selon la revendication 8, **caractérisé en ce qu'**il comprend un sous système thermique et de contrôle de débit (25) qui réalise le durcissement de la résine dans le moule, ainsi que le durcissement de la résine qui reste dans le dispositif de conditionnement et le dispositif d'alimentation supplémentaire (29) simultanément et indépendamment par la synchronisation du contrôle de température sur les contrôleurs de température.
